# EUROPEAN PATENT APPLICATION

(11) **EP 2 775 176 A1**
(43) Date of publication of application: **10.09.2014**
(21) Application number: 13158313.0
(22) Date of filing: 08.03.2013
(51) Int. Cl.: F16J 15/32, B02C 2/04

(54) **Sealing ring for gyratory crusher**

(71) Applicant: Sandvik Intellectual Property AB, 811 81 Sandviken (SE)
(72) Inventor: Malmberg, Mats, SE-274 63 Rydsgård (SE); Svensson, Arvid, 21833 Bunkeflostrand (SE)

(57) **Abstract**

A gyratory crusher sealing ring (124) to provide a seal between a discharge zone (109) positioned below a crushing chamber (104) and a working part (128) zone of the crusher that accommodates various bearing assemblies and drive components that provide gyroscopic precession of the head (106) and inner (105) crushing shell within the crusher. The sealing ring (124) comprises a radially innermost flange (302) having a first and second sealing lip (202, 203). The flange, via the sealing lips, comprises a dual function to increase the integrity of the seal between the discharge zone (109) and the working part zone (128) and to provide a double scraper to wipe contaminant from a sealing part of the crusher.

## Description

### Field of invention

The present invention relates to a sealing ring for a gyratory crusher and a gyratory crusher comprising the same, the sealing ring having a flange for positioning against a sealing part of the crusher to inhibit dust and other contaminants passing into a working part zone of the crusher.

### Background art

Gyratory crushers are used for crushing ore, mineral and rock material to smaller sizes. Typically, the crusher comprises a crushing head mounted upon an elongate main shaft. A first crushing shell (typically referred to as a mantle) is mounted on the crushing head and a second crushing shell (typically referred to as a concave) is mounted on a frame such that the first and second crushing shells define together a crushing chamber through which the material to be crushed is passed. A driving device positioned at a lower region of the main shaft is configured to rotate an eccentric assembly arranged about the shaft to cause the crushing head to perform a gyratory pendulum movement and crush the material introduced in the crushing chamber. Example gyratory crushers are described in WO 2004/110626; WO 2008/140375, WO 2010/123431, US 2009/0008489, GB 1570015, US 6,536,693, JP 2004-136252, US 1,791,584 and WO 2012/005651.

Conventionally, the driving device interfaces with the drive components and bearings that provide and stabilize the gyroscopic precession of the shaft and crushing head within the crusher. These working parts are typically accommodated within a working part zone that is partitioned and sealed from the crushing chamber and the discharge zone (through which crushed material passes) by a sealing assembly. The sealing assembly commonly comprises a sealing ring that is journalled in sealing contact against a dust collar positioned at the interface between the working part zone and the discharge zone. Typically, the sealing rings are formed as an annular body where an inner surface of the annulus provides the sealing contact against an outer surface of the dust collar. As will be appreciated, the seal integrity is proportional to the force by which the sealing ring is mated in contact with the dust collar. However, due to a requirement to accommodate thermal expansion of the sealing ring and/or the dust collar during use this contact force is limited which in turn increases the likelihood of seal failure and the contamination of the working parts located in close proximity to the discharging crushed material. What is required is a sealing arrangement that addresses these problems.

### Summary of the Invention

It is an object of the present invention to provide a sealing arrangement for a gyratory crusher that is optimised to maximise the seal strength at the interface region between the discharge zone of the crushing chamber and a working part zone that accommodates the drive and bearing assemblies associated with the main shaft and crushing head. It is a further objective to extend as far as possible, the longevity of the sealing assembly to reduce the frequency for maintenance and replacement of the seal wear parts. In particular, it is a further objective to provide a seal that is self-lubricating.

The objectives are achieved by providing a sealing arrangement in the form of a sealing ring that provides a dual seal function. This is provided by a flange at a radially innermost region of the ring that comprises at least a pair of annular sealing lips that are configured to flex on mating contact with a corresponding sealing part of the crusher. In particular, the lips are spatially separated in the axial direction of the crusher when in use and are configured to splay outwardly in a radial direction (away from the central axis) when the sealing ring is journalled against the sealing part, which is typically the dust collar.

According to the specific implementation, the flexibility of the sealing lips is provided by a reduced volume of material at the flange relative to the main ring body that extends radially outward of the flange. In particular, the annular sealing lips are preferably formed as annular ribs that extend radially inward from the flange and are separated from one another (in the main axis direction) by an annular cavity in the form of an annular concave region.

The flexible annular sealing lips enable the sealing ring to be journalled against the dust collar with greater force so as to increase the seal strength effect. Any thermal expansion and/or flexibility of the sealing assembly is thereby accommodated by the radially deformable sealing lips. The consideration of thermal expansion associated with conventional sealing rings is therefore mitigated whilst minimising the weight of the sealing assembly and not increasing the number of component parts and design complexity. This is desirable to reduce the overall weight of the crusher and minimise the frequency and extent of repair and maintenance.

According to a first aspect of the present invention there is provided a gyratory crusher sealing ring for a gyratory crusher having a crushing chamber defined between an outer and an inner crushing shell with a discharge zone to allow crushed material out of the crushing chamber, the inner crushing shell supported on a head mounted at a main shaft, wherein a working part zone is positioned below the head and about the shaft and comprises working parts to enable the head to move gyroscopically within the crusher, the sealing ring configured for positioning between the discharge zone and the working part zone and comprising: an annular body having a radially outermost region and a radially innermost region, the regions separated radially by an upper face and a lower face; a sealing flange positioned at the innermost region to bear against a sealing part of the crusher at a region between the discharge zone and the working part zone; **characterised in that** the sealing flange comprises: a first annular lip and a second annular lip, the first and second lips extending radially inward from the innermost region; and an annular cavity formed between the first and second lips at the innermost region such that the first and second lips are capable of providing respective first and second sealing contact with the sealing part.

Optionally, the first lip is positioned substantially at the upper face and the second lip is positioned substantially at the lower face. Optionally, a radially innermost end region of the first lip is positioned substantially coplanar with the upper face and a radially innermost end region of the second lip is positioned substantially coplanar with the lower face. Optionally, a separation distance between the first and second lips in a direction perpendicular to a plane of the upper and lower faces is substantially equal to a distance between the upper and lower faces at a position of the annular body radially outward of the sealing flange.

Preferably, the cavity comprises a radially concave surface extending between the first and second lips. Preferably, the sealing ring further comprises a respective annular channel positioned immediately behind each of the first and second lips at the respective upper and lower face. Preferably, the first and second lips extend transverse to a general plane of the annular body between the outermost and innermost regions. Optionally, the upper face and the lower face are substantially parallel. Optionally, a thickness of the annular body in a direction between the upper face and the lower face is less than the radial length in a direction between the outermost and innermost regions.

Optionally, the sealing ring may further comprise an outer sealing flange positioned at the radially outermost region to bear against a part of the crusher at a region between the discharge zone and the working part zone, the outer sealing flange comprising: a third annular lip and a fourth annular lip, the third and fourth lips extending radially outward from the outermost region; and the annular cavity formed between the third and fourth lips at the outermost regions such that the third and fourth lips are capable of providing respective third and fourth sealing contact with the part of the crusher. This configuration is advantageous to provide a double seal arrangement to prevent dust and particulates passing upwardly beyond the ring at its radially innermost and outermost regions.

Optionally, the sealing ring comprises a polymer material and preferably a polyamide based material. In one aspect, the polyamide material comprises a polyamide integrated with oil and/or solid lubricants.

According to a second aspect of the present invention there is provided a gyratory crusher comprising: an outer and an inner crushing shell with a crushing chamber defined therebetween; a discharge zone to allow crushed material out of the crushing chamber; a head mounted upon a main shaft and configured to support the inner crushing shell; a plurality of working parts positioned below the head about the main shaft within a working part zone to enable the head to move gyroscopically within the crusher; a sealing ring positioned at an interface between the discharge zone and the working part zone, the sealing ring comprising: an annular body having a radially outermost region and a radially innermost region, the regions separated radially by an upper face and a lower face; a sealing flange positioned at the innermost region to bear against a sealing part of the crusher at a region between the discharge zone and the working part zone; **characterised in that** the sealing flange comprises: a first annular lip and a second annular lip, the first and second lips extending radially inward from the innermost region; and an annular cavity formed between the first and second lips at the innermost region such that the first and second lips are capable of providing respective first and second sealing contact with the sealing part.

Preferably, the crusher further comprises a dust collar positioned about the main shaft at the interface between the discharge zone and the working part zone, the sealing ring positioned in sealing contact with a radially outward facing surface of the dust collar. In one aspect, the dust collar comprises three flanges extending transverse to one another from a central boss region such that a cross section through the dust collar defines a tri-armed star-like configuration.

Preferably, the crusher further comprises a seat provided at a lower region of the head, the seat configured to positionally support the sealing ring in position between the head and the dust collar. Optionally, the seat is releasably attached to a lower region of the head by a plurality of attachment elements optionally in form of threaded bolts received within complementary threaded bore holes that extend upwardly into the head from its lower end.

### Brief description of drawings

A specific implementation of the present invention will now be described, by way of example only, and with reference to the accompanying drawings in which:
Figure 1 is a partial cut-away perspective view of a gyratory crusher illustrating the crushing chamber, discharge zone and working part zone accommodating the drive components and bearings that provide and support the gyroscopic precession of the head within the crushing chamber according to a specific implementation of the present invention;
Figure 2 is a perspective view of a sealing ring for positioning at the interface between the discharge zone and the working part zone of the crusher of the figure 1;
Figure 3a is a perspective cross section view of a section of the sealing ring of figure 2;
Figure 3b is a magnified view of a part of the sealing ring section of figure 3a;
Figure 3c is a perspective cross sectional view of a section of the sealing ring according to a further embodiment of the present invention having a pair of additional sealing lips provided at a radially outermost region;
Figure 3d is a magnified view of the part of the sealing ring section of figure 3c;
Figure 4 is a cross sectional side view of the sealing ring of figures 2 to 3b journalled against a dust collar of the crusher of figure 1 according to a specific implementation of the present invention.

### Detailed description of preferred embodiment of the invention

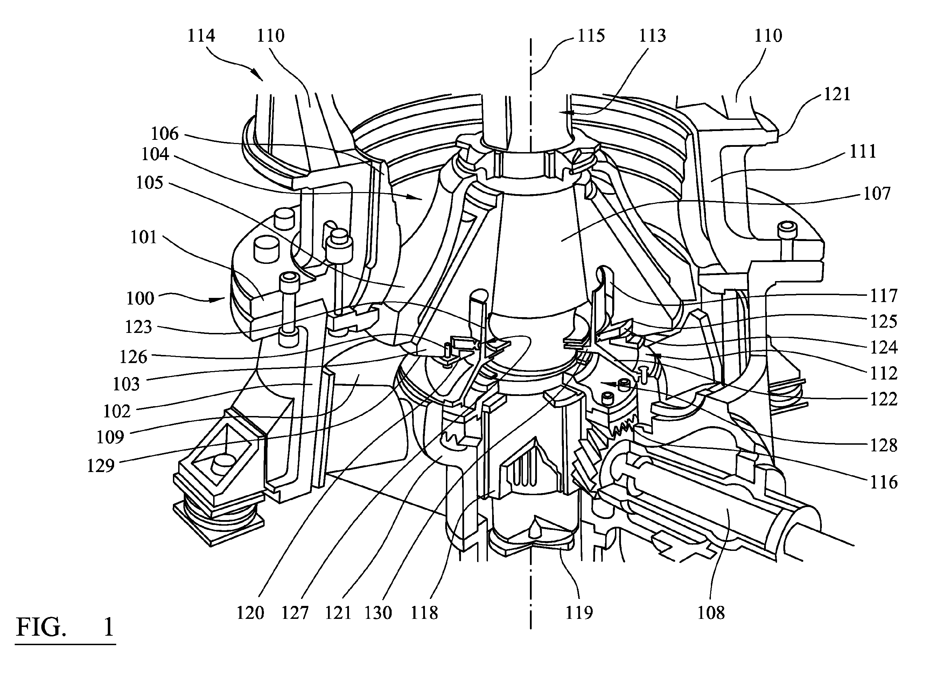

Referring to figure 1, a crusher comprises a frame 100 having an upper frame 101 and a lower frame 102. A crushing head 103 is mounted upon an elongate shaft 107. A first (inner) crushing shell 105 is fixably mounted on crushing head 103 and a second (outer) crushing shell 106 is fixably mounted at upper frame 101. A crushing zone 104 is formed between the opposed crushing shells 105, 106. A discharge zone 109 is positioned immediately below crushing zone 104 and is defined, in part, by lower frame 102.

Upper frame 101 is further divided into a topshell 111, mounted upon lower frame 102 (alternatively termed a bottom shell), and a support spider 114 that extends from topshell 111 and represents an upper portion of the crusher. The spider 114 comprises two diametrically opposed arms 110 that extend radially outward from a central boss (not shown) positioned on a longitudinal axis 115 extending through frame 100 and the gyratory crusher generally. Arms 110 are attached to an upper region of topshell 111 via an intermediate annular flange 121 that is centred around longitudinal axis 115. Typically, arms 110 and topshell 111 form a unitary structure and are formed integrally.

A drive (not shown) is coupled to main shaft 107 via a drive shaft 108 and suitable gearing 116 so as to rotate shaft 107 eccentrically about longitudinal axis 115 and to cause head 103 to perform a gyratory pendulum movement and crush material introduced into crushing chamber 104. An upper end region 113 of shaft 107 is maintained in an axially rotatable position by a top bushing (not shown) positioned intermediate between main shaft region 113 and the central boss (not shown). Similarly, a bottom end 118 of shaft 107 is supported by a bottom-end bearing assembly 119.

The crusher comprises a working part zone 128 that accommodates the bearing assemblies and drive components positioned immediately about the main shaft 107 below mantle 103 and towards the shaft bottom end 118. The working part zone 128 is partitioned from the discharge zone 109 by a sealing arrangement principally comprising an annular dust collar 112 and an annular sealing ring 124. Dust collar 112 comprises a first flange 122 having a radially outermost end realisably attached to an uppermost end of a mounting jacket 121 extending circumferentially about the bottom end 118 of shaft 107. A radially innermost end of flange 122 is divided into a short lateral flange 130 aligned transverse to flange 122 and orientated towards the outer surface of shaft 107. First flange 122 further divides into a third substantially vertical flange 123 that is aligned generally coaxially with shaft 107 and extends upwardly into head 103. In particular, flange 123 is accommodated within an annular cavity 117 that extends upwardly into head 103 from its bottom face 129. Cavity 117 flairs radially outward towards bottom face 129 to create an annular groove 125 also extending inwardly from bottom face 129.

Sealing ring 124 is at least partially accommodated within groove 125 and comprises a radially innermost end 127 that is journalled against an outer surface of vertical flange 123 of dust collar 112. Ring 124 extends circumferentially around, and is retained in sealing contact against, flange 123 by an annular seat 120. Seat 120 is releasably secured to bottom face 129 of head 103 via attachment threaded bolts 126 received within complementary threaded bore holes (not shown) that extend upwardly into the head 103 from its lowermost face 129. Seat 120 effectively sandwiches ring 124 between flange 123 of collar 112 and the walls that define groove 125 in the underside region of head 103. The circumferential sealing contact between ring 124 and collar 112 provides an effective seal to partition the working part zone 128 from the dust laden discharge zone 109.

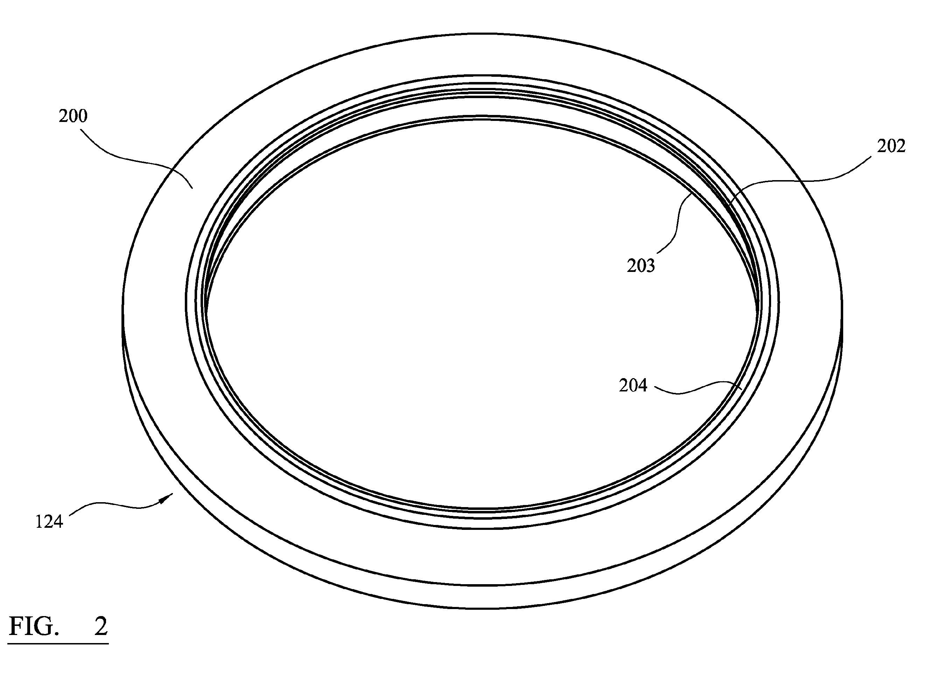

Referring to figures 2 to 3b, the sealing ring 124 comprises an annular body 200 having a radially innermost surface 302 and a radially outermost surface 303. A radially innermost region of body 200 is formed as a flange comprising a first annular lip 202 positioned substantially vertically above a second annular lip 203. Main body 200 further comprises an upward facing substantially planar face 300 and a corresponding downward facing substantially planar face 301. Both faces 300, 301 are aligned substantially parallel. The first and upper lip 202 comprises a radially innermost end region that is positioned substantially coplanar with face 300 and a corresponding innermost end region of lower lip 203 is positioned coplanar with face 301. The lips 202, 203 are separated in the direction of longitudinal axis 115 by the innermost surface 302 that is concave in the radially outward direction relative to axis 115. That is, concave 302 extends into main body 200.

A first annular groove 204 extends immediately behind upper lip 202 and extends downwardly from face 300. A corresponding annular groove 304 extends upwardly from lower face 301 immediately behind lower lip 203. Accordingly, the first and second lips 202, 203 are formed respectively by first and second arms 305, 306 that extend transverse to the radial length of ring 124 between outer and inner faces 303, 302. Each arm 305, 306 is defined, in part, by the respective grooves 204, 304 and concave surface 302. A depth and width of each groove 203, 304 is determined specifically to provide a particular thickness of each arm 305, 306 such that each arm 305, 306 is capable of '*flexing'* so as to deform radially outward from axis 115 to reduce a width of each corresponding groove 204, 304 when a force is transmitted through each respective lip 202, 203 (and ring 124). According to the specific implementation, the radially outward movement of each arm 305, 306 is provided by the relative thickness of each arm and the respective grooves 204, 304.

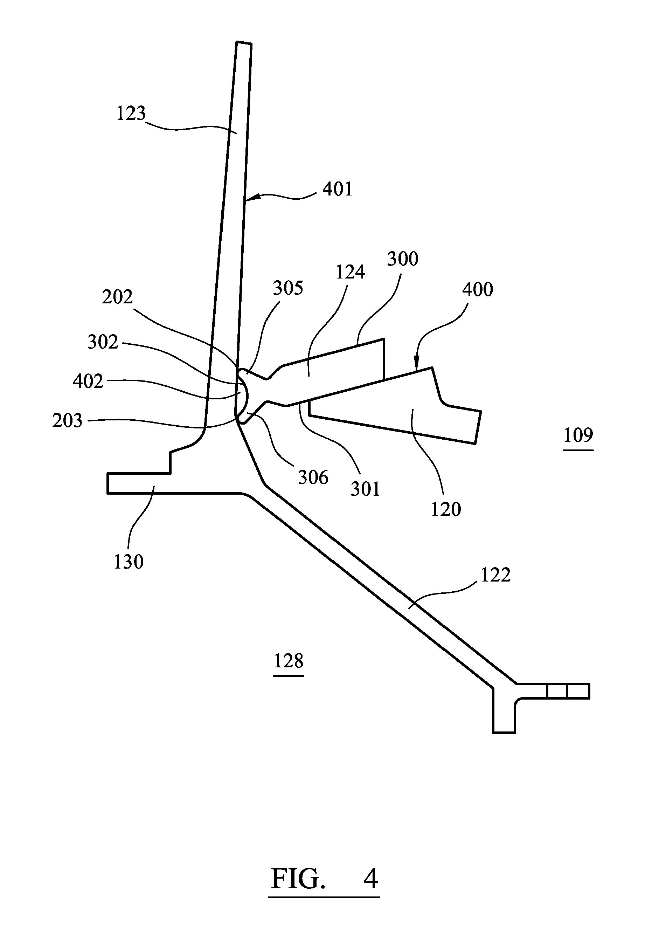

Referring to figure 4, and in use, each annular lip 202, 203 is configured for positioning circumferentially against an outer surface 401 of dust collar 112 and in particular near vertical flange 123. As radially innermost surface 302 of ring 124 is concave, an annular cavity 402 is created between lips 202, 203 and outer surface 401. Accordingly, the lower lip 203 when mated against outer surface 401 provides a first primary seal to partition discharge zone 109 from working part zone 128. Contact between second lip 202 and outer surface 402 provides a secondary seal for the separation of respective zones 109, 128. Each lip 202, 203 is retained in position at outer surface 401 by annular seat 120 and in particular an upward facing inclined surface 400. Lower face 301 of ring 124 is mounted upon inclined surface 400 and a sealing contact between lips 202, 203 and annular collar surface 401 is created and maintained via attachment of seat 120 with bolts 126 that engage into head 103.

As head 103 is caused to rotate gyroscopically by drive shaft 108 and gears 116, sealing ring 124 is displaced to move relative to dust collar 112. Accordingly, the radially innermost edge of lips 202, 203 slide over surface 401 in tight mating contact to prevent any dust particles and the like from passing from the discharge zone 109 upwardly into mantle cavity 117 and subsequently contaminating working part zone 128. Each sealing lip 202, 203 comprises a relatively narrow rounded end region that also functions as a scrapper to wipe contaminant particles from the collar outer surface 401. That is, lower lip 203 provides a first primary scraper and upper lip 202 provides a further and secondary scraper. The present sealing ring is therefore effective to prevent particulates from passing upwardly beyond a lower region of collar surface 401 and into working part zone 128.

As the sealing lip arms 305, 306 extend transverse to both the longitudinal axis 115 and radial axis of ring 124 (orientated between radially innermost end 302 and radially outermost end 303) the present sealing ring 124 comprises a dual function. Firstly, the flexing of each arm 305, 306 radially outward enables ring 124 to be forced into mating contact with collar surface 402 to a greater extent than conventional sealing rings. That is, any thermal expansion of the various working parts of the crusher during use is accommodated by the flexibility of arms 305, 306 and this enables ring 124 to be *'self-adjusting'* in the radial direction (relative to axis 115). As will be appreciated, the maximum radial force that can be applied to conventional dust rings is limited by the requirement for an *expansion space'* at the region of the dust ring to accommodate thermal expansion.

Additionally, the dual sealing lip arrangement 202, 203 is further advantageous to provide the primary and secondary scraping function such that the present sealing assembly (comprising sealing ring 124 and dust collar 112) is *'self-cleaning'* as head 103 gyrates within the crusher frame 100. Furthermore, as the sealing ring 124 comprises, in one embodiment a polyamide with an integrated lubricant, such as oil or solid lubricants. The sealing assembly may also be considered *'self-lubricating'* via movement of ring 124 against surface 401. This is advantageous to reduce maintenance and repair of the working parts of the crusher assembly.

According to further specific implementations, sealing ring 124 may comprise three or more lips 202, 203. In particular, ring 124 may comprise a plurality of additional circumferentially extending lips provided on surface 302 and extending between axially upper lip 202 and axially lower lip 203.

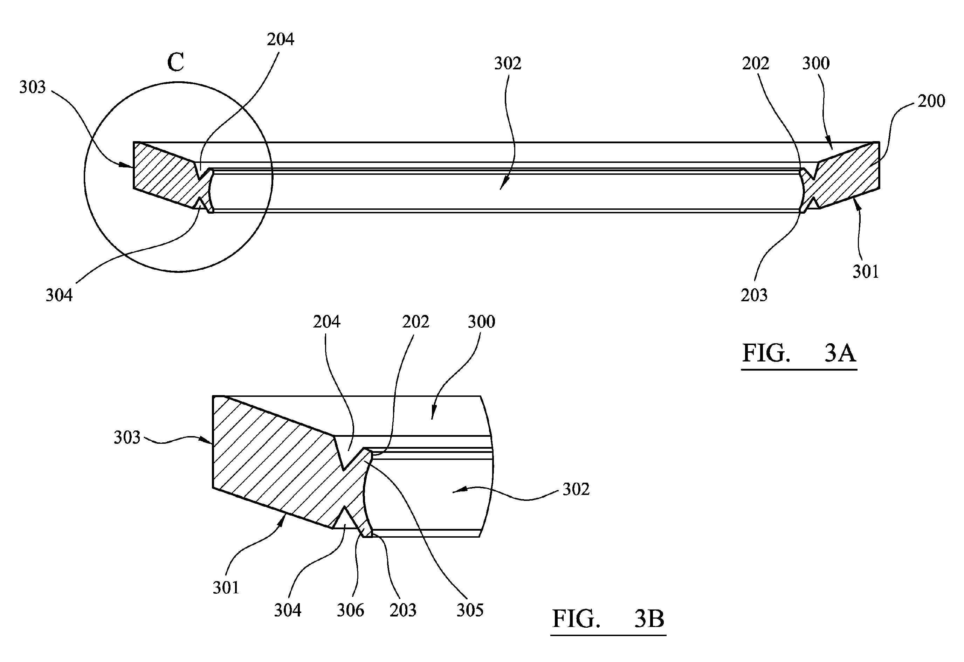

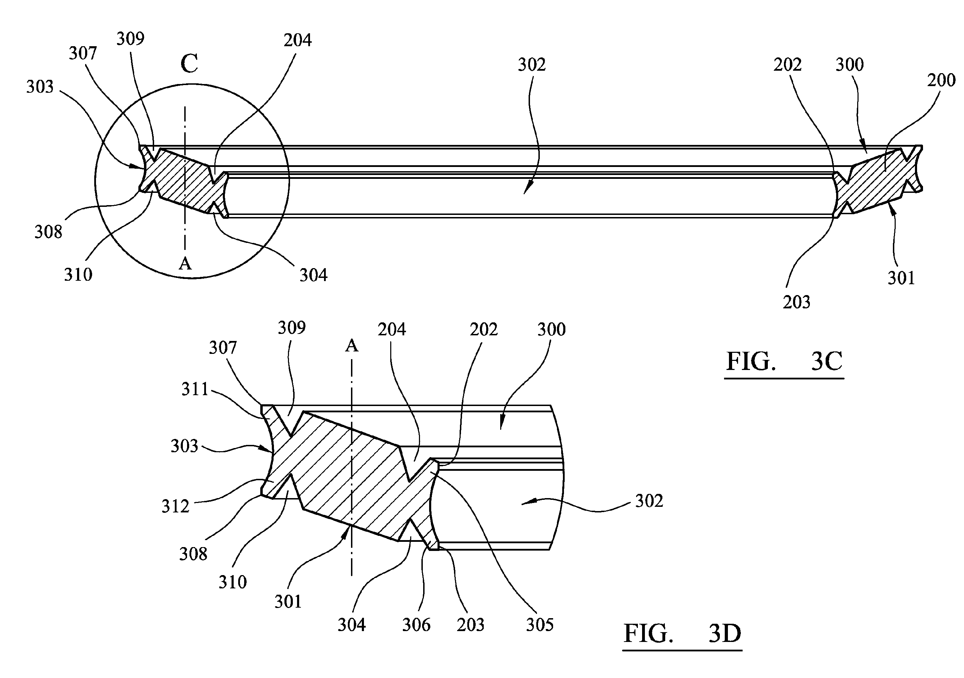

Figures 3c to 3d illustrate a further embodiment of the present invention. In particular, a third 307 and fourth 308 annular lip are provided at the outermost surface 303 such that ring 124 is symmetrical in a radial direction relative to plane A. That is, the outermost and innermost regions of ring 124 both comprise respective sealing flanges. As illustrated, a third annular groove 309 extends immediately behind upper third lip 307 and extends downwardly from face 300. A corresponding annular groove 310 extends upwardly from lower face 301 immediately behind fourth lower lip 308. Accordingly, the third and fourth lips 307, 308 are formed respectively by third and fourth arms 311, 312 that extend transverse to the radial length of ring 124. As illustrated, the shape, configuration and dimensions of the radially innermost flange are identical to those of the radially outermost flange. This configuration provides a dual seal arrangement such that the third and fourth lips 307, 308 are capable of being mated against a region of crushing head 103 (or an associated component) to prevent dust and debris from passing rearwardly behind ring 124 from the discharge zone 109 and into the working part zone 128.

## Claims

1. A gyratory crusher sealing ring (124) for a gyratory crusher having a crushing chamber (104) defined between an outer (106) and an inner (105) crushing shell with a discharge zone (109) to allow crushed material out of the crushing chamber (104), the inner crushing shell (105) supported on a head (103) mounted at a main shaft (107), wherein a working part zone (128) is positioned below the head (103) and about the shaft (107) and comprises working parts (116, 119) to enable the head (103) to move gyroscopically within the crusher, the sealing ring (124) configured for positioning between the discharge zone (109) and the working part zone (128) and comprising:
an annular body (200) having a radially outermost region and a radially innermost region, the regions separated radially by an upper face (300) and a lower face (301);
a sealing flange positioned at the innermost region to bear against a sealing part (112) of the crusher at a region between the discharge zone (109) and the working part zone (128);
**characterised in that** the sealing flange comprises:
a first annular lip (202) and a second annular lip (203), the first (202) and second (203) lips extending radially inward from the innermost region; and
an annular cavity (302) formed between the first (202) and second (203) lips at the innermost region such that the first (202) and second (203) lips are capable of providing respective first and second sealing contact with the sealing part (112).

2. The sealing ring as claimed in claim 1 wherein the first lip (202) is positioned substantially at the upper face (300) and the second lip (203) is positioned substantially at the lower face (301).

3. The sealing ring as claimed in claims 1 or 2 wherein the cavity (302) comprises a radially concave surface extending between the first (202) and second (203) lips.

4. The sealing ring as claimed in any preceding claim comprising a respective annular channel (204, 304) positioned immediately behind each of the first (202) and second (203) lips at the respective upper (300) and lower (301) face.

5. The sealing ring as claimed in any preceding claim wherein the first (202) and second (203) lips extend transverse to a general plane of the annular body (200) between the outermost and innermost regions.

6. The sealing ring as claimed in any preceding claim wherein a radially innermost end region of the first lip (202) is positioned substantially coplanar with the upper face (300) and a radially innermost end region of the second lip (203) is positioned substantially coplanar with the lower face (301).

7. The sealing ring as claimed in any preceding claim wherein a separation distance between the first (202) and second (203) lips in a direction perpendicular to a plane of the upper (300) and lower (301) faces is substantially equal to a distance between the upper (300) and lower (301) faces at a position of the annular body (200) radially outward of the sealing flange.

8. The sealing ring as claimed in any preceding claim further comprising an outer sealing flange positioned at the radially outermost region to bear against a part of the crusher at a region between the discharge zone (109) and the working part zone (128), the outer sealing flange comprising:
a third annular lip (307) and a fourth annular lip (308), the third and fourth lips (307, 308) extending radially outward from the outermost region; and
the annular cavity formed between the third (307) and fourth (308) lips at the outermost regions such that the third (307) and fourth (308) lips are capable of providing respective third and fourth sealing contact with the part of the crusher.

9. The sealing ring as claimed in any preceding claim wherein a thickness of the annular body (200) in a direction between the upper face (300) and the lower face (301) is less than the radial length in a direction between the outermost and innermost regions.

10. The sealing ring as claimed in any preceding claim wherein the sealing ring comprises a polymer based material.

11. The sealing ring as claimed in claim 10 wherein the polymer comprises a polyamide material integrated with oil and/or solid lubricants.

12. A gyratory crusher comprising:
an outer (106) and an inner (105) crushing shell with a crushing chamber (104) defined therebetween;
a discharge zone (109) to allow crushed material out of the crushing chamber (104);
a head (103) mounted upon a main shaft (107) and configured to support the inner crushing shell (105);
a plurality of working parts positioned below the head (103) about the main shaft (107) within a working part zone (128) to enable the head (103) to move gyroscopically within the crusher;
a sealing ring (124) positioned at an interface between the discharge zone (109) and the working part zone (128), the sealing ring (124) comprising:
an annular body (200) having a radially outermost region and a radially innermost region, the regions separated radially by an upper face (300) and a lower face (301);
a sealing flange positioned at the innermost region to bear against a sealing part (112) of the crusher at a region between the discharge zone (109) and the working part zone (128);
**characterised in that** the sealing flange comprises:
a first annular lip (202) and a second annular lip (203), the first (202) and second (203) lips extending radially inward from the innermost region; and
an annular cavity (302) formed between the first (202) and second (203) lips at the innermost region such that the first (202) and second (203) lips are capable of providing respective first and second sealing contact with the sealing part (112).

13. The crusher as claimed in claim 12 further comprising a dust collar (112) positioned about the main shaft (107) at the interface between the discharge zone (109) and the working part zone (128), the sealing ring (124) positioned in sealing contact with a radially outward facing surface (401) of the dust collar (112).

14. The crusher as claimed in claim 13 further comprising a seat (120) provided at a lower region of the head (103), the seat (120) configured to positionally support the sealing ring (124) in position between the head (103) and the dust collar (112).

15. The crusher as claimed in claim 14 wherein the seat (120) is releasably attached to a lower region (129) of the head (103) by a plurality of attachment elements (126).
